Europäisches Patentamt

European Patent Office

Office européen des brevets

(11) Publication number: **0 292 799**
**A2**

## (12) EUROPEAN PATENT APPLICATION

(21) Application number: **88107654.1**

(22) Date of filing: **12.05.88**

(51) Int. Cl.⁴: **H02M 5/257**

(30) Priority: **29.05.87 SU 8702252**

(43) Date of publication of application:
**30.11.88 Bulletin 88/48**

(84) Designated Contracting States:
**BE CH DE LI NL**

(71) Applicant: **NIXFLU AB**
**Hamnen Box 229**
**S-430 93 Hälsö(SE)**

(72) Inventor: **Rönnbäck, Sture**
**Varvsvägen 29**
**S-430 93 Hälsö(SE)**

(74) Representative: **Ferkinghoff, Claes-Göran et al**
**ALFONS HEDBERGS PATENTBYRA AB**
**Aschebergsgatan 35**
**S-411 33 Göteborg(SE)**

(54) **Circuit power regulator.**

(57) A device (1) for continuously variable regulation
of the power of a circuit. The device (1) is intended
to be inserted in a conventional fuse socket in a
distribution box.

Fig.1

## Circuit Power Regulator

The subject invention concerns a circuit power regulating device which is equipped with a manually and continuously variable rheostat.

Devices of this kind for circuit power regulation purposes are previously known, for instance in the form of switches known as "dimmer switches" which are mounted in a circuit to replace conventional switches. Such dimmer switches are installed in a permanent manner and therefore they must be mounted by an authorized specialist. This means that dimmer switches become very expensive when one considers the total costs, i.e. including not only the purchase price but also the installation costs. Because they are installed permanently dimmer switches cannot either be transferred from one circuit to another without costly help from a specialist.

The purpose of the subject invention is to provide a circuit power regulating device which is simple to install and which does not require the expertise from a specialist for its installation and which in addition can be transferred easily from one circuit to another.

This purpose is achieved in a regulating device in accordance with the invention which is characterized therein that it consists of a fuse holder which may be placed in a distribution box, and of a member which may be rotated relative to the holder, said member being connected to the rheostat which is incorporated in a circuit controlling the firing angle of a triac incorporated in the regulating device, and which member is arranged, when rotated in one direction to increase the triac firing angle and when rotated in the opposite direction to reduce the triac firing angle, thus increasing or reducing, respectively, the power transferred to a load.

In accordance with one advantageous embodiment the device in accordance with the invention is also provided with a light emitting diode arranged to light up when current flows through the device.

Further characteristics of the invention will appear from the dependent claims attached hereto and from the following description of one preferred embodiment.

The most important advantage found in the device in accordance with the invention is that it may be installed by a layman without difficulty. The installation takes place in the following manner. Initially, the fuse, holder is unscrewed and the fuse removed from the circuit to be regulated whereupon the device in accordance with the invention is screwed in position together with the fuse and the installation is thus completed.

Another advantage gained by the device in accordance with the invention is that by lowering the circuit voltage somewhat a considerably longer serviceable life of the bulbs connected in the circuit is obtained. For instance, it has been found that a reduction of the voltage by 10% doubles the serviceable life of a bulb.

One advantageous embodiment of the invention will be described in closer detail in the following with reference to the accompanying drawings, wherein

Fig. 1 is a perspective view of the device,

Fig. 2 is a longitudinal sectional view through the device in accordance with Fig. 1 and shows one example of arranging the components in the interior of the device, and

Fig. 3 is one example of a wiring diagram for the device.

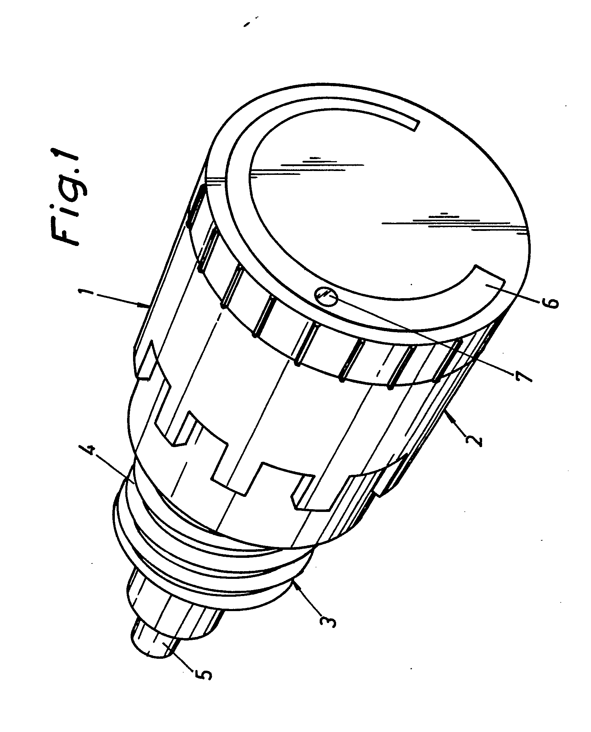

In Fig. 1, numeral reference 1 denotes the entire device in accordance with the invention. The device comprises a movable member 2 and a stationary member 3 on which threads 4 are provided. A holder for a glass fuse 5 is mounted centrally in the threaded member 3. The movable member 2 is rotationally mounted around the stationary member 3 and it is provided with a transparent window 6 through which a light emitting diode 7 is visible to indicate the existence of current flows through the device.

The device 1 is also provided with stop means (not shown) to immobilize member 2 to allow the device to be screwed into or unscrewed from a socket in a distribution box.

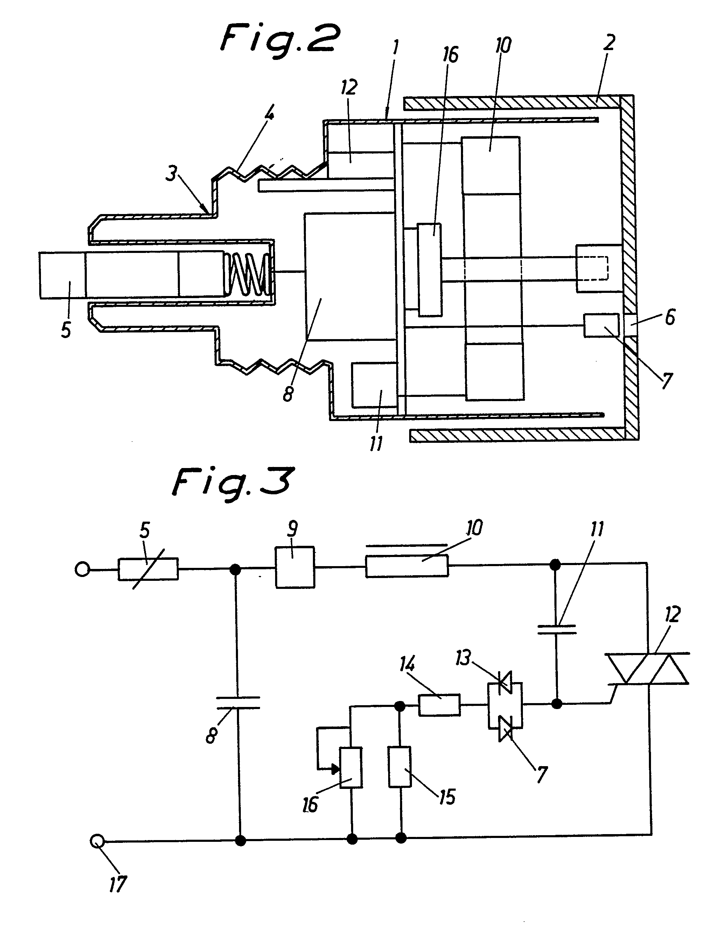

As appears from the diagram of Fig. 3 a capacitor 8 is connected after the fuse 5, the purpose of said capacitor being to eliminate voltage peaks. An inductor 10 provided with a thermal fuse 9 is connected to eliminate radio interference. The circuit also includes a phase angle controlled triac 12 and a capacitor 11 which in combination with resistors 14, 15, 16 function to control the length of time from the zero voltage level of the net to the firing level (30 V) of the triac 12. Resistor 14 serves to regulate the maximum output power of the device, resistor 15 which could have either a fixed or an adjustable resistance value, serves to regulate the minimum output power and resistor 16 is a rheostat which is mechanically coupled to the movable member 2 of the device 1. The rheostat regulates the firing angle of the triac 12 and thus also the momentary output power. The circuit also includes two oppositely connected diodes 7 and 13, of which diode 7 is the one visible from the exterior and which is intended to indicate that current flows through the device 1. The output current at connection 17 in the wiring diagram is conducted to the threads of the stationary member 3 of the device 1.

In the following description it is assumed that the principle of power regulation of alternating current by means of phase angle controlled triacs and thyristors is commonly known and for that reason this principle is not discussed herein.

As appears from Fig. 3, the circuit is similar to the one found in most dimmer switches with the exception of the presence of the light emitting diode 7 and the diode 13.

The power regulating part functions in the following manner. It is assumed that the alternating current applied via the fuse 5 and the connection 17 is in the stage when the voltage equals zero and when its polarity is such that it is positive at the connection 17 and negative at the fuse 5. At this moment no current flows through the device and the triac 12 therefore is blocked. At the next moment the applied voltage starts to increase and current begins to flow through the device via the rheostat 16, the resistors 15 and 14, the light emitting diode 7 and the capacitor 11. As a result, the capacitor 11 is charged. When the voltage across the latter reaches approximately 30 V the triac 12 fires and power is delivered to the associated load.

Since the triac 12 fires at the voltage level of 30 V and the capacitor 11 is charged to this voltage, the capacitor 11 contains the same amount of energy at the firing moment, irrespectively of the actual firing angle. This means that a constant amount of energy passes through the resistors 16, 15 and 14, the light emitting diode 7 and the diode 13 during each half period of the alternating current, irrespectively of the the control angle, which in turn means that the current flowing through the light emitting diode.has an effective value that is constant. The result is that the diode emits a constant-intensity light, independently of the output angle, as long as current flows through the device.

It should be noted that the device is not limited to the embodiment described in the aforegoing but that several other embodiments and modifications are possible within the scope of the appended claims. For instance, the electrical circuit could be arranged in a different manner to agree with the safety and disturbance elimination rules that apply in different countries.

## Claims

1. A circuit power regulating device (1) which is equipped with a manually and continuously variable rheostat (16), **characterized therein** that the regulating device (1) consists of a fuse holder (3) which may be mounted in a distribution box, and of a member (2) which may be rotated relative to the holder (3), said member (2) being connected to the rheostat (16) which is incorporated in a circuit controlling the firing angle of a triac included in the regulating device, and which member (2) is arranged, when rotated in one direction to increase the triac firing angle and when rotated in the opposite direction to reduce the triac firing angle, thus increasing or reducing, respectively, the power transferred to a load.

2. A regulating device as claimed in claim 1, **characterized therein** that the device (1) is provided with a light emitting diode (7) to indicate the existence of current flow through the circuit.

3. A regulating device as claimed in any one of the preceding claims, **characterized therein** that the fuse holder (3) of the device (1) is intended for a glass fuse (5).

Fig.1

**Fig.2**

**Fig.3**